# EUROPEAN PATENT APPLICATION

(11) **EP 1 167 114 A1**
(43) Date of publication of application: **02.01.2002**
(21) Application number: 01115432.5
(22) Date of filing: 27.06.2001
(51) Int. Cl.: B60N 2/28

(54) **Child safety seat**

(30) Priority: 28.06.2000 JP 2000194610
(71) Applicant: Combi Corporation, Taito-ku, Tokyo (JP)
(72) Inventor: Mori, Isamu, Minami-Urawa Techno-Center, Saitama-shi, Saitama-ken (JP); Takizawa, Manabu, Minami-Urawa Techno-Center, Saitama-shi, Saitama-ken (JP)
(74) Representative: Sparing - Röhl - Henseler Patentanwälte

(57) **Abstract**

An improved child safety set is disclosed, which in a thin and simple structure using an unconventional material is highly capable of shock absorption by dispersing a body pressure omnidirectionally to protect the head and the stomach of an infant seated in the safety seat in a traveling vehicle. At least in a head corresponding portion (1e) of a child safety-seat main body (1) there is disposed a mass of a cushioning material that is capable of absorbing an impact by dispersing a pressure thereof. Such a mass of cushioning material is preferably a mass of gel material (8) or a liquid sealed flexible bag (30).

## Description

The present invention relates to a child safety seat using a yieldable mass of material having excellent cushioning or shock absorbing properties for protecting the body and, inter aria, the head of a young child or infant seated on the child safety seat.

A child safety seat basically comprises a safety-seat main body adapted to receive and securely hold an infant and a main-body bearer for supporting the safety-seat main body immovably from its bottom side. With the bearer fixed fast to a seat in a vehicle such as a passenger car, the child safety seat is designed to assure safety for the infant placed in the vehicle while traveling.

The child safety-seat main body includes a safety-seat seat portion in which the infant sits down and a safety-seat backrest portion continuous from the seat portion and along which the infant reclines. The child safety-seat main body also typically includes a pair of right-hand side and a left-hand side armrest portion rising vertically or outwards with an obtuse angle from the seat portion and a pair of a right-hand side and a left-hand side portion continuous from the armrest portions and rising vertically or outwards with an obtuse from the backrest portion, thus exhibiting an armchair-like configuration. The child safety seat thus assumes a shell structure in which the seat, backrest, armrest and side portions are formed unitarily in one piece and configured so as to make the infant seated as "wrapped" thereby almost completely. Included also in the child safety seat are shoulder and waist belts for holding the infant onto the child safety-seat main body, and a stomach pad rising from the safety-seat seat portion to protect the stomach of the infant seated therein. The stomach pad is provided with a buckle cooperating with a pair of tongues through which the shoulder and waist belts pass to fasten them tight, thereby holding the infant fast to the child safety-seat main body.

Further, the safety-seat bearer is attached to the bottom of the safety-seat main body for placement on a seat of the vehicle and for fixation fast thereto by means of a belt from the vehicle seat. The safety-seat bearer typically is designed to render the safety-seat main body turnable horizontally and/or slidable in its reclining direction.

The seat, backrest, left- and right-hand side armrest and left- and right-hand side portions where they form a rugged skeleton or frame of the child safety-seat main body are generally made integrally of a molded one-piece plastic seat product from a polypropylene resin. Such a hard-surfaced sheet, which itself is too solid and hence inadequate to protect the infant, is covered on its surfaces with a layer of a foamed material such as of polyurethane, which is in turn covered with a skin layer of a cloth material filled with a sponge or the like. Thus, it has been customary to form the safety-seat main body as a seat squab or cushion that is highly elastic as a whole.

Designed for an emergency situation in which a vehicle loaded with an infant should, for example, be struck from behind by a succeeding vehicle, giving the infant a physical shock, the child safety seat to soften the physical shock or impact on the infant and especially to prevent damage on its head has, so far designed in the main, had a squab made of a foam material such as foam polyurethane as mentioned above, which is disposed in particular on its backrest portion. And its effectuality characteristics have been sought to be improved by multi-layered laminar materials that are different in density, elasticity, thickness etc. This is because a foam urethane squab or pad that is excellent on capability of absorbing a shock in a direction in which it is applied has been thought to be perfect to protect the head of an infant seated in the child safety seat.

In actuality, however, in case a rear-end collision occurs, it has been found that an impact force on the infant from behind and the driver's brake hitting action immediately after it got the shock cause the infant's body in a matter of seconds to swing large back and forth by a force of inertia and a counteraction that then result. This swinging motion brings about the infant's head abruptly rocking back and forth and/or from side to side about its neck. Reacting the rear-end collision, the infant's head swings abruptly back, hitting on the backrest portion of the child safety seat. Then, the conventional foam polyurethane seat squab by being compressed and thereby reduced in bulk is capable of cushioning to some degree the infant head against the collision's first impact force, accordingly. Having high elasticity, however, the foam polyurethane squab, which is compressed and reduced in bulk, immediately gives rise its restoring force and thus acts to expand. This restoring force of the foam polyurethane squab applied on the infant's head acts as a counterforce to swing it back forwards. Further, the immediately succeeding driver's brake jerking action creates a force of inertia that adds to heavily swinging back the infant's head forwards. This force of inertia and the abovementioned restoring force of the foam polyurethane due to its elasticity multiplied together cause an acceleration that swings the infant forwards. As a result, the infant's head tends to rock back and forth and from side to side a number of times and may very possibly have damage.

Thus, the foam polyurethane squab currently in use because of its very material properties is able to absorb a shock but is found to have had the problem that it can absorb the shock strictly only in the direction in which the shock comes about and its high elasticity comes to bring about a counter-impact after its compression. Having no satisfactory function to absorb a body or body-applied impact pressure by dispersing it multi-directionally, omnidirectionally or isostatically, the foam polyurethane squab when applied as a cushioning material to a child safety seat has now been found to be insufficient to assure satisfactory safety for its wearer.

Indeed, as a result of extensive research in which various experimental trials were accumulated it has been discovered that it is more effective and even critical for designing a child safety seat to disperse an impact applied to the head multi-directionally, omnidirectionally or isostatically, and have arrived at the present invention.

It is accordingly an object of the present invention to resolve the problems mentioned above and to provide a child safety seat that using a new material or materials is thickness or bulk small, is simple in structure, and yet has an excellent shock absorbing ability with a capability of dispersing a body applied impact pressure multi-directionally, omnidirectionally or isostatically.

This is solved by a child safety seat, characterized in that at least in a head corresponding portion of a child safety-seat main body there is disposed a mass of a cushioning material that is capable of absorbing an impact by dispersing a pressure thereof. Such a mass of cushioning material in accordance with one important aspect of the present invention is preferably a mass of gel material.

According to the above-mentioned construction, it has been found that a notable viscoelasticity and an eminent pressure dispersing effect of such a mass of gel material have been found to be capable of materially softening a shock being imposed on the head of an infant such as in a rear-end collision accident. In this case, a mass of gel material, unlike a conventional seat squab made of foamed polyurethane material, hardly gives rise to a restoring force due to high elasticity, and thus, if pressure contacted, largely reduces the swing forward of the head due to a rebound force. Further, the great viscoelasticity possessed by gel material can reduce the thickness of the mass correspondingly.

According to a specific feature of the present invention, the mass of gel material disposed in the head corresponding portion is preferably covered with, or sealed in an enclosure made of, flexible film. This prevents the gel material inside from running out, and also makes it easy to handle the gel material and facilitates the operation of fitting the child safety-seat main body therewith.

According to another specific feature of the present invention, the flexible film covering the mass of gel material is preferably formed with raised and sunken surface regions. This can reduce the tension of the flexible film overlying the surface of the mass of gel material. Therefore, in the event the infant upon receiving a shock due to the car's acceleration, accident or the like hits against the backrest of the child safety seat, the flexible film will readily and enough draw, stretch and deform following the deformation of the mass of gel material. Thus, the viscoelastic function of the mass of gel material can more fully be exploited.

According to another specific feature of a child safety seat of the present invention, the child safety-seat main body has a seat and a backrest portion that in their skeletal areas are formed in one piece to provide a shell structure, and the backrest portion includes a headrest portion subdivided therein where the mass of gel material is disposed.

In this case, it is desirable that the headrest portion should have a laminar structure on the skeletal area of the backrest portion in which a layer of foamed material, the mass of gel material and a urethane film are successively laid. This gives the child safety-seat main body an enhanced supporting stiffness to allow the mass of gel material to exhibit its action and effect to a maximum.

According to another specific feature of a child safety seat of the present invention, a formed urethane sheet or a non-woven fabric is laid on the inside to the mass of gel material.

Applying a foamed urethane sheet to the back or inside of the mass of gel material absorbs a greater amount of an impact in the direction in which it is imposed, and improves the workability of a process of, e.g., fitting the mass of gel material in the child safety-seat main body because of greater firmness of foamed urethane sheet than flexible film. Also, in addition to an improvement in the workability of the process of fitting into the backrest portion of the main body, a cost reduction of the child safety seat is achieved.

According to another specific feature of a child safety seat of the present invention, the child safety-seat main body may include a seat portion and a stomach pad portion rising from the seat portion and the stomach pad portion may have in a stomach corresponding area a mass of gel material disposed therein. Also, the child safety-seat main body may include a right-hand and left-hand side portion rising right and left to the backrest portion each of which side portions may have in a head corresponding portion a mass of gel material disposed therein. Providing a mass of gel material not only in the headrest portion but also in the stomach portion and/or the temporal region corresponding portions in these ways, a further enhanced safety is attained not only for an impact in the longitudinal direction of a car such as in the event of the car's acceleration, deceleration or rear-end collision but also for an impact in its lateral direction of the vehicle such as in aside collision.

A child safety seat according to the present invention may be implemented in a form in which at least in a head corresponding portion of a child safety-seat main body there is disposed a mass of a cushioning material, made of a liquid sealed flexible bag, which is capable of absorbing an impact by dispersing a pressure thereof.

In this case, a notable viscoelasticity and an eminent pressure dispersing effect of such a mass of liquid material, like a "water bed", materially softens a shock to an infant body, especially its head in the event a car loaded with the infant is, e.g., struck from behind.

According to a specific feature of a child safety seat of the present invention in this form of implementation thereof, the liquid sealed flexible bag preferably has, on the side of the child safety-seat main body, a layer of foamed material disposed adjacent thereto. This specific form of implementation, by using both the liquid filled flexible bag that is high in body pressure dispersing power as an alternative of a mass of gel material and the foamed material (e.g., polyurethane) that is effective to absorb an impact in the direction in which it is applied, provides a child safety seat that is capable of absorbing such an impact as well and hence, here again, is of an enhanced safety.

It is possible to provide a plurality of subdivided compartments in the liquid sealed flexible bag. Alternatively, it is also possible to incorporate one or more masses of elastic material in the liquid sealed flexible bag.

These arrangements, in effect, subdivide liquid in the flexible bag into a plurality of yieldable masses of liquid and thus assure constant stability of retention.

The present invention will better be understood from the following detailed description and the drawings attached hereto showing certain illustrative forms of embodiment of the present invention.
Fig. 1 is a front view that illustrates a child safety seat that represents a preferred form of embodiment of the present invention;
Fig. 2 is a side or elevational view of the child safety seat shown in Fig. 1;
Fig. 3 is a side view in part cross sectional that illustrates a stomach pad portion of a child safety-seat main body shown in Figs. 1 and 2;
Figs. 4A, 4B and 4C are each a cross sectional view that illustrates a mass of gel material covered with a flexible film, wherein Fig. 4A shows such covering in which the mass of gel material is covered over both its outside and inside with a flexible film, Fig. 4B shows such covering in which the mass of gel material has its outside covered with a flexible film and its inside covered with a polyurethane sheet and Fig. 4C shows such covering in which the mass of gel material has its outside covered with a flexible film and its inside covered with a non-woven fabric;
Fig. 5 is a perspective view that illustrates a shock absorbing material pad for use in the present invention, which is formed of a mass of gel material whose surfaces are covered with a raised and sunken flexible film;
Figs. 6A and 6B are each a cross sectional view, illustrating respectively states before and when an impact is imposed on a mass of gel covered with a flat flexible film without raised and sunken surface areas, that is normally flat or smooth;
Figs. 7A and 7B are each a cross sectional view, illustrating respectively states before and when an impact is imposed on a mass of gel covered with a raised and sunken flexible film; and
Fig. 8 is a perspective view that illustrates another form of embodiment of the present invention in which the shock absorbing material is a liquid with which a pad in the form of a flexible bag is filled.
Figs. 9A, 9B and 9C are experimental results for the properties of a child safety seat incorporating a mass of gel material in accordance with the present invention, in comparison with those of a conventional child safety seat.

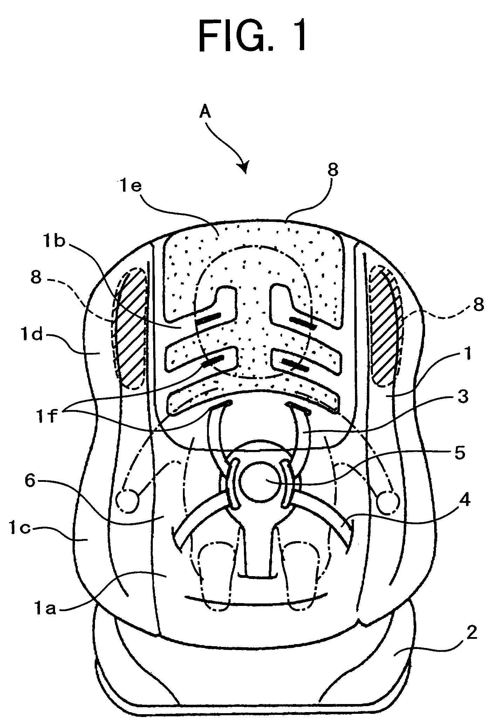

As shown in the embodiment of Fig. 1, the child safety seat basically comprises the child safety-seat main body 1 adapted to receive and securely hold an infant and a child safety-seat bearer 2 that is designed to render the safety-seat main body turnable horizontally and/or slidable in its reclining direction. The safety-seat bearer 2 is adapted to be securely fixed to the bottom of a seat of a vehicle such as a passenger car by means of a belt or the like, and is attached to the child safety-seat main body 1 at its bottom to support it, thereby providing capability to assure safety for an infant securely held by the child safety seat A in the vehicle while traveling.

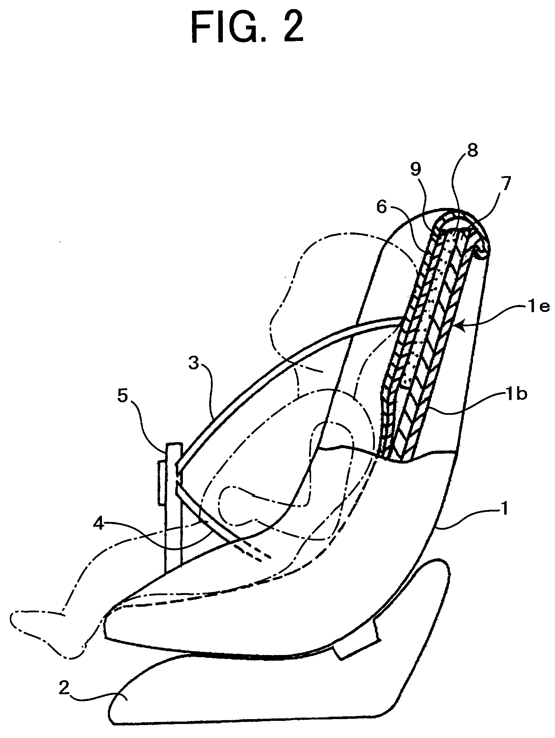

The child safety-seat main body 1 includes a safety-seat portion 1a on which the infant sits down and a safety-seat backrest portion 1b continuous from the seat portion 1a. The child safety-seat main body 1 also includes shoulder and waist belts 3, 4 for holding the infant to the child safety-seat main body 1, and a stomach pad 5 rising from the safety-seat seat portion 1a up to an area corresponding to the stomach of the infant seated thereon. The stomach pad 5 is provided with a buckle, which cooperating with a pair of tongues through which the shoulder and waist belts 3, 4 pass acts to fasten them tight, thereby holding the infant fast to the safety-seat main body 1 as indicated by the one-dot chain lines shown in Figs. 1 and 2.

The child safety-seat main body 1 as in the illustrated form of embodiment also includes a pair of right-hand side and a left-hand side armrest portion 1c rising vertically or outwards with an obtuse angle from the seat portion 1a and a pair of a right-hand side and a left-hand side portion 1d continuous from the armrest portions 1c and rising vertically or outwards with an obtuse angle from the backrest portion 1b, thus exhibiting an armchair-like configuration. The child safety-seat main body 1 in this way takes a shell structure in which the seat portion 1a, the backrest portion 1b, the armrest portions 1c and the side portions 1d as they provides a skeleton therefor are formed unitarily by plastic molding from, say, polypropylene resin, covered over its entire skeleton with a seat squab 6 and thus configured so as to make the infant seated as "wrapped" softly thereby almost completely. Such a shell structure of the child safety-seat main body 1 despite of its simple construction ensures a high stiffness as required and allows a mass of gel material to be described later to act quite effectively for the purposes of the present invention. Further, the seat portion 1a, the backrest portion 1b, the armrest portions 1c and the side portions 1d making up the seat main body 1 are connected together smoothly, preferably in the form of curved surfaces continuously interconnected so that the seated infant may be held with no feeling of physical incompatibility.

The backrest portion 1b of the child safety-seat main body 1 as shown in Fig. 2 includes as a subdivision thereof a headrest portion 1e in the shell structure. The headrest portion 1e has a laminated construction in which a portion of the above mentioned plastic skeleton that lies in the backrest portion 1b is overlaid with a foam layer 7 that in turn is overlaid with a layer of a shock absorbing material having impact pressure dispersing power or property. Thereupon, a urethane film 9 and a ventilating layer that forms a seat covering 6 likewise follow. Included in the surface covering 6, the ventilating layer though not shown in the Figures is provided in an area thereof that the infant body contacts and is made of three-dimensional meshes so that it may not become sticky with sweat of the infant. And so as to surround this ventilating layer a fabric portion that the urethane foam is glued to is disposed.

The shock absorbing pad that constitutes an important make-up element of the present invention is made, in this form of embodiment, of a gel material in the form of a mass 8. The mass of gel material 8 has a peculiar shock absorbing property that is capable of dispersing an impact pressure efficiently and is therefore an extremely suitable component for the present invention.

A gel or gel material 8 used here is a two-phase colloidal system in which in a liquid dispersion medium a dispersed phase or dispersoid is assumed to be solidified by losing its fluidity, is reduced in solubility and takes an interconnected network structure with the dispersion medium contained therein. Therefore, with both the dispersion medium and dispersoid each interconnected, the gel material 8 is distinctive in that it exhibits a great visco-elasticity and a salient impact dispersing effect. There have been known a variety of gel species, including polymer gel in which a large quantity of a liquid is contained in a polymer network, and a silicone resin or styrene resin based gel. Such a gel is found to be excellent in properties in damping impact or vibrational energy by transforming it into thermal energy. The present inventors upon conducting various experimental trials have found that one type of gel or another regardless of its hardness is highly effective to disperse an impact body pressure, and have confirmed that every type of gel species tried exhibits an excellent shock-dispersed absorbing effect. Considering that a gel may vary its properties depending on temperature, humidity or any other environmental parameter, choice may be made of a type of gel suited to the environment in which it is used as incorporated in a child safety seat according to the present invention.

In this illustrated form of embodiment of the present invention, a mass of such gel material 8 is disposed in the child safety-seat main body 1, especially at least in the above-mentioned headrest subdivision 1e thereof in the backrest portion 1b thereof. Consequently, if a car loaded with an infant is, e.g., accidentally struck from behind, when the infant's head 1b hitting on the backrest portion 1b has a impact or shock, the shock will be caught and received in an enlarged area behind the head with the mass of gel material 8 functioning to disperse the body (head) pressure effectively. Since the shock is thus absorbed with increased efficiency, it is found that the mass of gel material 8 here is highly effective to protect the infant's head from an impact due to a rear-end collision or the like accident.

While for the sake of its body pressure dispersing function only it suffices to dispose the mass of gel material 8 alone, it should be noted that a foamed polyurethane material, that is highly functional to absorb an impact in the direction in which it is applied and that is also of low cost, may advantageously be used in combination with the gel material 8 as will be mentioned later to provide a child safety seat with the ability to more efficiently absorb a heavy impact in the direction of its application and hence of an enhanced safety, and yet economically.

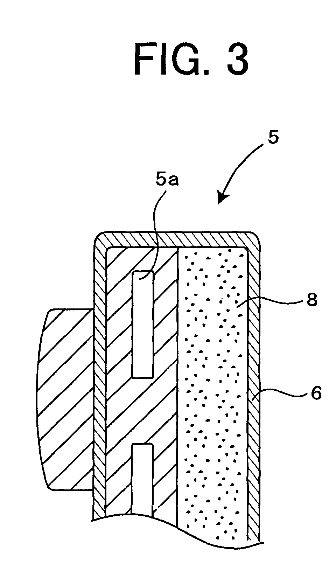

Further, while the shoulder and waist belts 3, 4 are desirably made of a fabric that is woven from high-strength synthetic-resin fiber such as to make them not only strong enough to withstand an impact in a car collision or the like accident but soft to some extent, it is further desirable that a mass of gel material 8 be also disposed in the insides of the shoulder and waist belts, especially those areas thereof that directly face the infant's shoulder and waist. It may also be noted that the stomach pad 5 for functioning as a buckle or buckles as well is made up of steel parts and hard-plastic molded parts in combination with cloth in areas to be in direct contact with the infant's body. On this account, the stomach pad 5 as shown in Fig. 3 in its cross sectional view may have a mass of gel material 8 disposed inside of a surface covering 6 thereof to come in contact with the stomach. The mass of gel material 8 so disposed acts to disperse a body pressure at the stomach and chest due to a heavy impact, and thus further enhances safety for the infant. In the Figure, openings 5a are shown formed in the buckle portion of the stomach pad 5 to receive and fix therein the tongues through which the shoulder and waist belts 3, 4 pass.

Further, it is desirable that a mass of gel material 8 be disposed in each of the side portions 1b that project to the right-hand and left-hand sides of the backrest portion 1b of the child safety-seat main body 1, in areas as indicated by oblique lines in Fig. 1. While an impact normally applied to the head can be dispersedly absorbed effectively by the headrest portion 1e, the masses of gel material 8 disposed in the side portions 1d can effectively protect the temporal regions from an impact when it is applied in a transverse or lateral direction. These masses of gel material 8 for the stomach contact area and the side portions 1d may be adopted suitably by selection.

It should be noted here that the area of the headrest subdivision 1e in the backrest portion 1b of the child safety-seat main body 1 is formed at each of three separate heights with a pair of openings 1f for engagement by the ends of the shoulder belts 3 when inserted therein, and as shown the ends of the shoulder belts 3 are engaged with the engagement openings 1f at the lowermost height. As the infant grows, the shoulder belt 3 becomes engaged with a pair of the engagement openings located higher. Thus, the mass of gel material 8 is disposed and arranged so as not to interfere with these pairs of the shoulder engagement openings 1f.

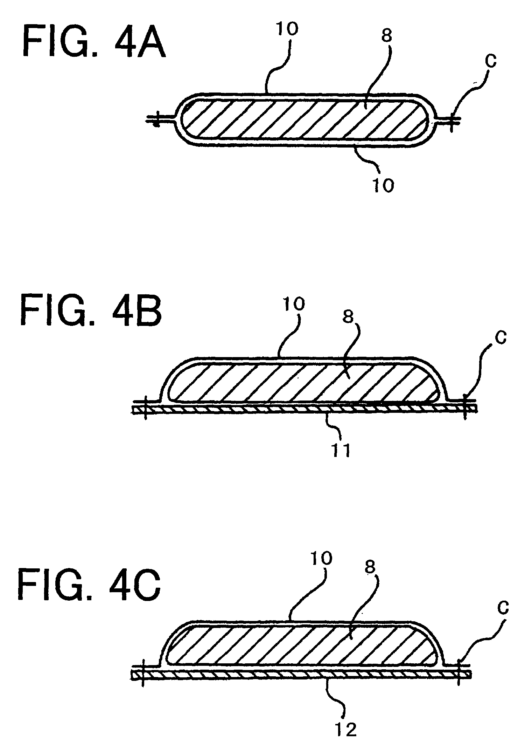

Referring next to Figs. 4A, 4B and 4C, mention is made of available forms of embodiment for covering of the mass of gel material 8. Fig. 4A shows in a cross sectional view a covering in which a mass of gel material 8 is covered over both its outside and inside with a flexible film 10, Fig. 4B likewise shows a covering in which such a mass of gel material 8 has its outside covered with a flexible film 10 and its inside covered with a foamed polyurethane material 11, and Fig. 4C likewise shows a covering in which such a mass of gel material 8 has its outside covered with a flexible film 10 and its inside covered with a non-woven fabric 12.

In the form of embodiment shown in Fig. 4A, the mass of gel material 8 is introduced into a bag formed of the flexible film 10 such as of polyurethane, and the opening of introduction is shown as vacuum sealed at **C**. This prevents the loaded gel material 8 inside from running out. While a mass of gel material 8 is singly yielding and hard to be fixed in shape, covering or housing the mass of gel material 8 with a flexible film 10 in this manner makes it easy to handle the yieldable mass and also to work setting it in the child safety-seat main body 1.

Also, where a form of embodiment shown in Fig. 4B is adopted in which the mass of gel material 8 is covered over its inside with the foamed urethane sheet 11, not only does the foamed urethane sheet 11 absorb much of the impact in the direction in which it is applied, but the foamed urethane form 11 being more firm than the flexible film 10 tends to retain its form, thus improving the workability of its setting and other operations.

Further, using a non-woven fabric 12 in the inside of the mass of gel material 8 as shown in Fig. 4C not only improves the workability in the process of setting the covered mass of gel material 8 in the backrest portion of the child safety-seat main body 1, but brings about a cost reduction for the child safety seat product. In the forms of embodiment shown in Figs. 4B and 4C as well, reference character **C** indicates where vacuum sealing is effected.

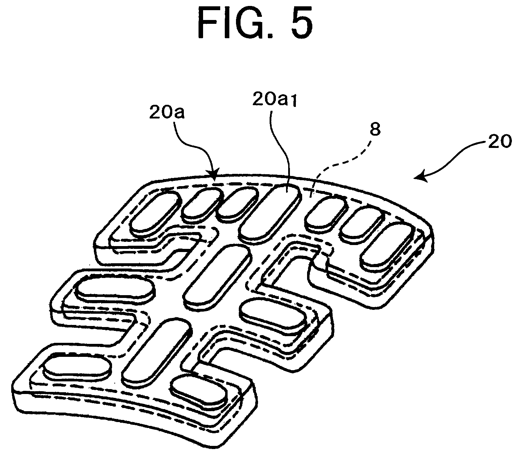

Mention is next made of a third form of embodiment of the present invention with reference to Figs. 5A to 7B.

In the third form of embodiment shown in perspective view in Fig. 5, a flexible film 20 that covers or encloses an aforementioned mass of gel material 8 to be incorporated as a shock absorbing material in a child safety seat according to the present invention is formed with raised and sunken surface regions 20a. The mass of gel material 8 is received in the flexible film 20 formed with the raised and sunken surface regions 20a whose sizes and numbers are suitably selected. The mass of gel material 8 gets and extends into the insides of the raised surface regions 20a1 so they, too, are filled with the gel material. The shapes, sizes, locations and numbers of these raised and sunken surface regions 20a may be appropriately chosen in designing the child safety seat product.

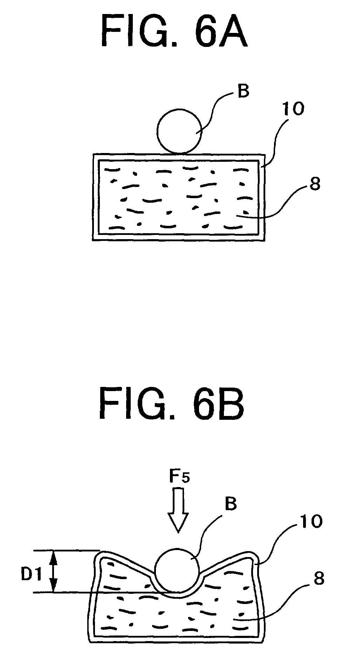

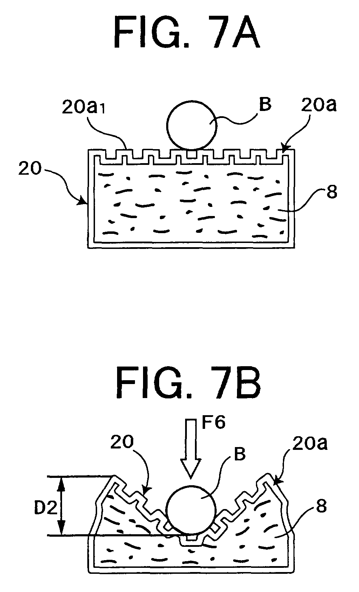

Figs. 6A to 7B are presented for the sake of explaining how the flexible film 20 filled with the mass of gel material 8 acts when an impacts is applied thereto, in case (1) the flexible film surface is made even (Figs. 6A and 6B) by being, e.g., in the form 10 shown in Fig. 4A, and in case (2) it is made uneven by being formed with the raised and sunken surface regions 20a (Figs. 7A and 7B), the Figures being shown each in a cross sectional view.

If a body **B** shown in Fig. 6A has an impact force applied thereto as shown in Fig. 6B from the direction indicated by the arrow, the mass of gel material 8 will, according to its viscoelasticity, be deformed by the body **B** downwards (as shown) all around the region that first receives the impact force, and the flexible film 10 surface will also be deformed so as to follow that, while expanding or stretching. When the expansion of the flexible film 10 exceeds or reaches a certain extent where its tension becomes maximum, the flexible film 10 can no longer follow the mass of gel material 8 that is being deformed. Thus, the whole of the flexible film 10 and the mass of gel material 8 will then no longer be deformed despite the latter's viscoelastic capability of further deformation. As a result, the body **B** will be limited to sink relatively shallow with a depth D1 in the mass of gel material 8. The maximum force that can then be absorbed has a magnitude F5 that is small corresponding to the maximum amount of sinking.

On the other hand, in case a flexible film 20 covering or enclosing the mass of gel material 8 therewith is used provided with raised and sunken surface regions 20a and thus made uneven or rugged, let it be assumed that a body **B** shown in Fig. 7A has an impact force applied thereto as shown in Fig. 7B from the direction indicated by the arrow. Then, the mass of gel material 8 here again will, according to its viscoelasticity, be deformed by the body **B** downwards (as shown) all around the region that first receives the impact force, and the flexible film 20 surface will be deformed so as to follow deformation of the mass of gel material 8, while expanding or stretching. In this case, however, the flexible film 20 provided with the raised and sunken surface regions 20a and thus larger in the entire pressure receiving surface area has the capability of stretching and deformation, following a larger deformation of the mass of gel material 8, to an greater extent corresponding to an increase in the surface area, compared with the case of Fig. 6B. As a consequence, the body **B** will be enabled to sink more deep with a depth D2 in the mass of gel material 8. The maximum force F6 that can there be absorbed will be much greater in magnitude than F5.

Assuming the body **B** to be the head of an infant, it follows, therefore, that the mass of gel material 8 in the case of Figs. 6A and 6B is only capable of absorbing the force F5. Consequently, if a large impact force that exceeds the force F5 is applied, a difference [impact force - F5] will act on the head. In comparison, the arrangement of Figs. 7A and 7B has the maximum absorbable force F6 that is greater than F5 in the case of Figs. 6A and 6B. Accordingly, even with a large impact applied there, difference [impact force - F6] becomes much smaller, and the head is much more safely and advantageously protected.

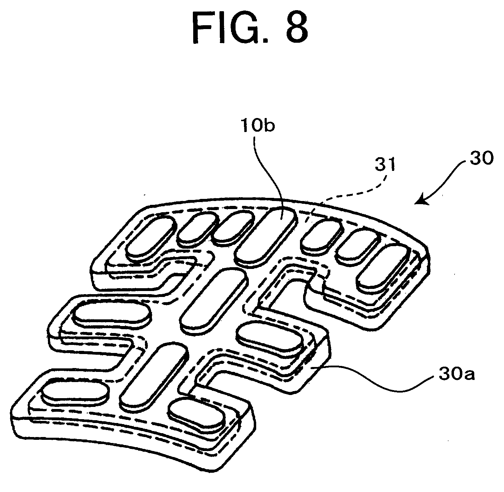

An explanation is next given in respect of a fourth form of embodiment of the present invention with reference to Fig. 8. In this form of embodiment of the invention, use is made of a liquid for the shock absorbing material. In this illustrated form of embodiment, a bag 30 formed from a flexible sheet has the liquid 31 such as water contained therein, thus constituting a miniaturization of the so-called "water bed". To wit, a mass of liquid 31 contained and enclosed in the flexible bag 30 replaces the mass of gel material 8 mentioned hereinbefore. If an impact is applied to act on the infant's head supported on the bag 30, the flexible water-filled bag 30 will be deformed in conformity with the head in contact therewith. Then, a notable viscoelasticity and an eminent pressure dispersing effect of the "water bed" made by the flexible water filled bag 30 can cushion the impact against the infant's head to a large extent.

Further, the flexible bag 30 filled with the liquid 31 may be covered with a flexible film 30a formed with raised and sunken surface regions to extend the limit of expansion or stretching, and to decrease the tension, of the pressure receiving surface as mentioned before. Then, in the event a car loaded with the infant has an impact applied thereto, e.g., by being struck from behind, the ability of the flexible film to draw, stretch and deform unrestrictedly or at large following the deformation of the liquid enables the impact to be cushioned adequately.

Also, so that the flexible bag 30 filled with the liquid 31 may in use not produce an excessive body pressure dispersing effect to the extent that it may move unstably right and left, the flexible bag 30 can have a plurality of small subdivided compartments formed therein and in addition or alternatively a mass or masses of cushioning material such as sponge therein.

Mention is next made of experimental results for the properties of a child safety seat incorporating a mass of gel material in accordance with the present invention, in comparison with those of a conventional child safety seat.

For the skin material that houses the mass of gel material, use is made of a rectangular parallelopiped bag of about 30 cm long, 30 cm wide and 15 cm thick, in which a mass of styrene resin based gel material according to the present invention is filled and tightly sealed. This is made specimen 1.

A bag of the same size as in specimen 1 is prepared having an upper layer (mass) of gel material and a lower layer (mass) of foamed urethane resin disposed therein with a volume ratio of 1:1. This is made specimen 2.

As a comparative example, a bag of the same size as in specimens 1 and 2 is prepared having a mass of foamed polyurethane resin. This is made specimen □ 3.

Tests are conducted to measure shock-absorbing properties of specimens 1, 2 and 3.

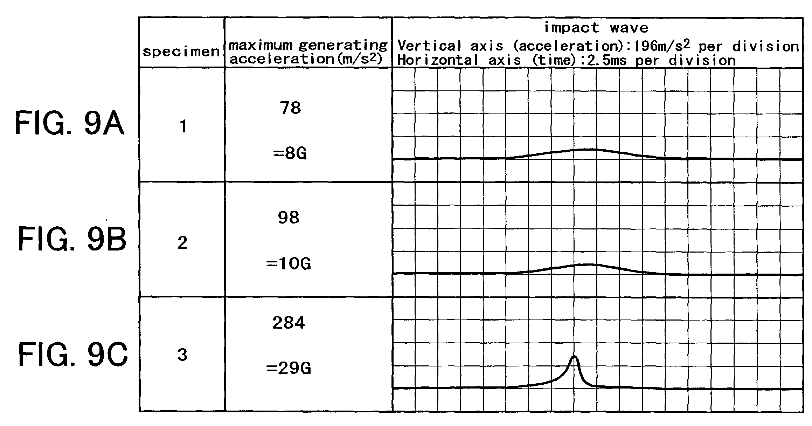

First, specimen 1 is placed on a steel plate and a drop striker (having an end diameter of 50 mm and a weight of 5.0 kg) equipped with an acceleration detector is dropped at a point spaced from specimen 1 by a distance of 2.0 mm. The acceleration then measured is 196 m/s², indicating that the maximum acceleration generated is 78 m/s² (= 8G) as shown in Fig. 9A.

Next, specimen 2 is measured in the same conditions as with specimen 1. As shown in Fig. 9B, the maximum generating acceleration is found to be 98 m/s² (= 10G).

For comparison, measurement is made of the foamed urethane specimen, specimen 3 in the same conditions as with specimen 1. The maximum acceleration generated is found to be 284 m/s² (= 29G) as shown in Fig. 9C.

From these results, it is seen that using a gel material as the shock cushioning material strikingly enhances the impact absorbing effect.

As set forth in the foregoing description, an improved child safety seat is provided in accordance with the present invention, wherein there is disposed at least in a head corresponding portion of the child safety seat a mass of cushioning material, in particular an enclosed mass of gel material or liquid, that can absorb an impact by dispersing a pressure thereof. A notable viscoelasticity and an eminent pressure dispersing effect of such a mass of gel or liquid material have been found to materially better soften a shock, thereby preventing or alleviating damages to an infant body, especially its head in the event a car loaded with the infant is decelerated, accelerated, or involved in a traffic accident.

Further, covering a mass of gel material with a flexible film is provided to facilitate attaching it to a backrest portion of a child safety-seat main body. Yet further, forming the flexible film with raised sunken surface regions is provided to give the flexible film the ability to draw and stretch unrestrictedly or at large following the deformation of the liquid, thereby enabling the impact to be still much more softened.

## Claims

1. A child safety seat, **characterized in that** at least in a head corresponding portion of a child safety-seat main body (1) there is disposed a mass (8) of a cushioning material that is capable of absorbing an impact by dispersing a pressure thereof.

2. The child safety seat of claim 1, **characterized in that** the cushioning material (8) is of a gel material.

3. The child safety seat of claim 2, **characterized in that** said mass (8) of gel material is covered with a flexible film (10, 20).

4. The child safety seat of claim 3, **characterized in that** said flexible film (10, 20) covering said mass (8) of gel material is formed with raised and sunken surface regions.

5. The child safety seat of anyone of the claims 1 to 4, **characterized in that** said child safety-seat main body (1) has a seat (1a) and a backrest portion (1b) that in their skeletal areas are formed in one piece to provide a shell structure, and said backrest portion (1b) includes a headrest portion (1e) subdivided therein where said mass of gel material is disposed.

6. The child safety seat of claim 5, **characterized in that** said headrest portion (1e) has a laminar structure on the skeletal area of said backrest portion (1b) in which a layer (7) of foamed material, said mass (8) of gel material and a urethane film (11) are successively laid one upon another.

7. The child safety seat of anyone of the claims 2 to 6, **characterized in that** a formed urethane sheet (11) is laid on the inside to said mass (8) of gel material.

8. The child safety seat of anyone of the claims 2 to 7, **characterized in that** a non-woven fabric (12) is laid on the inside to said mass (8) of gel material.

9. The child safety seat of anyone of the claims 5 to 8, **characterized in that** said child safety-seat main body (1) includes a seat portion (1a) and a stomach pad portion (5) rising from said seat portion (1a) and said stomach pad portion (5) has in a stomach corresponding area a mass (8) of gel material disposed therein.

10. The child safety seat of anyone of the claims 5 to 9, **characterized in that** said child safety-seat main body (1) includes a right-hand and left-hand side portion (1d) rising right and left to said backrest portion (1b), each of which side portions (1d) has in a head corresponding portion a mass (8) of gel material disposed therein.

11. The child safety seat, **characterized in that** at least in a head corresponding portion of a child safety-seat main body (1) there is disposed a mass (8) of a cushioning material, made of a liquid sealed flexible bag (10, 20), which is capable of absorbing an impact by dispersing a pressure thereof.

12. The child safety seat of claim 11, **characterized in that** said liquid sealed flexible bag (10, 20) has, on the side of said child safety-seat main body (1), a layer (11) of foamed material disposed adjacent thereto.

13. The child safety seat of claim 11 or 12, **characterized in that** said liquid sealed flexible bag has in its inside a plurality of subdivided compartments.

14. The child safety seat of claim 11 or 12, **characterized in that** said liquid sealed flexible bag has in its inside a mass of elastic material disposed therein.

15. The child safety seat of anyone of the claims 1 to 14, **characterized in that** said child safety-seat main body includes a stomach pad portion (5) having a stomach corresponding area where there is disposed such a mass (8) of a cushioning material that is capable of absorbing an impact by dispersing a pressure thereof.

16. The child safety seat of anyone of the claims 1 to 15, **characterized in that** said child safety-seat main body (1) includes a belt portion with an inside area for contact with an infant body, where there is disposed such a mass (8) of a cushioning material that is capable of absorbing an impact by dispersing a pressure thereof.
